Europäisches Patentamt

European Patent Office

Office européen des brevets

(11) Veröffentlichungsnummer : **0 143 933**
**B1**

(12) # EUROPÄISCHE PATENTSCHRIFT

(45) Veröffentlichungstag der Patentschrift :
21.01.87

(21) Anmeldenummer : 84111457.2

(22) Anmeldetag : 26.09.84

(51) Int. Cl.⁴ : **C 01 B 25/37**, C 08 K   3/32,
C 08 L  27/06

(54) **Verfahren zur Herstellung von basischem Kupferphosphat mit heller Eigenfarbe und einer mittleren Korngrösse kleiner als 10 um.**

(30) Priorität : 23.11.83 DE 3342292

(43) Veröffentlichungstag der Anmeldung :
12.06.85 Patentblatt 85/24

(45) Bekanntmachung des Hinweises auf die Patenterteilung : 21.01.87 Patentblatt 87/04

(84) Benannte Vertragsstaaten :
AT BE CH DE FR GB IT LI NL

(56) Entgegenhaltungen :
EP-A- 0 031 428
EP-A- 0 063 768
US-A- 3 628 920
GMELINS HANDBUCH DER ANORGANISCHEN CHEMIE - KUPFER, 8. Auflage, Teil B - Lieferung 2, Seiten 920-925, 1961, Verlag Chemie, GmbH, Weinheim, DE;

(73) Patentinhaber : **HÜLS AKTIENGESELLSCHAFT**
**Patentabteilung / PB 15 - Postfach 13 20**
**D-4370 Marl 1 (DE)**

(72) Erfinder : **Schüler, Ralf, Dr.**
**Käthe-Kollwitz-Strasse 3**
**D-4350 Recklinghausen (DE)**
Erfinder : **Maahs, Günther, Dr.**
**Oderbruchstrasse 19**
**D-4370 Marl (DE)**

## Beschreibung

Die Herstellung von basischem Kupferphosphat ist grundsätzlich bekannt (Gmelin, Handbuch der anorg. Chemie, Band 60, Teil A, Seite 175 und Teil B, Seiten 920 bis 925).

Basisches Kupferphosphat der Zusammensetzung $Cu_3 (PO_4)_2 \cdot Cu(OH)_2$ hat in jüngerer Zeit Bedeutung erlangt als rauchvermindernder Zusatz zu Thermoplasten, insbesondere Polyvinylchlorid (DE-A-32 14 960 bzw. EP-A-63 768).

Die bisher bekannt gewordenen Verfahren zur Herstellung von basischem Kupferphosphat führen jedoch zu Produkten mit dunkler Eigenfarbe und hoher Korngröße, wesentlich über 10 μm.

Diese Eigenschaften vermindern jedoch wesentlich ihren Einsatz in farblosen Thermoplasten wegen der deutlichen Verfärbung durch die dunkle Eigenfarbe und naturgemäß ungleichmäßiger Verteilung der groberen Pulver.

Aufgabe der Erfindung ist es daher, ein verbessertes Verfahren zur Herstellung von basischem Kupferphosphat der Zusammensetzung $Cu_3 (PO_4)_2 \cdot Cu(OH)_2$ bereitzustellen, welches eine helle Eigenfarbe und eine mittlere Korngröße < 10 μm besitzt.

Die Lösung der Aufgabe gelingt, wenn man basisches Kupfercarbonat mit einer Schüttdichte von weniger als 800 g/l in wäßriger Dispersion mit mindestens stöchiometrischen Mengen Phosphorsäure bei Temperaturen unterhalb 70 °C behandelt, die entstandene Reaktionsmischung im gleichen Temperaturbereich mechanisch weiterbewegt, dann kurzzeitig auf Siedetemperatur der wäßrigen Phase erhitzt und schließlich das basische Kupferphosphat von der wäßrigen Phase abtrennt.

Als basisches Kupfercarbonat wird insbesondere solches vom Malachit-Typ $CuCO_3 \cdot Cu(OH)_2$ eingesetzt, welches eine Schüttdichte von weniger als 800 g/l, vorteilhaft von 100 bis 600, vorzugsweise von 300 bis 600 g/l besitzt. Soweit verfügbar, kann auch basisches Kupfercarbonat der Zusammensetzung $2 CuCO_3 \cdot Cu(OH)_2$ (Azurit) verwendet werden. Die Schüttdichte wird nach DIN 53 468 bestimmt ; dabei läßt man das basische Kupfercarbonat aus einem Trichter in einen Meßbecher bestimmten Volumens einfließen und wägt anschließend den gefüllten, an der Oberfläche glattgestrichenen Meßbecher. Handelsübliches basisches Kupfercarbonat besitzt Schüttdichten bis zu 1 500 g/l ; für das Verfahren der Erfindung werden solche Kupfercarbonatfraktionen gewählt, deren Schüttdichte im erforderlichen Bereich liegt.

Das basische Kupfercarbonat wird in wäßriger Dispersion mit Phosphorsäure behandelt, wobei die Phosphorsäure zweckmäßig in kleinen Mengen nach und nach der Dispersion zugegeben wird, beispielsweise läßt man die Phosphorsäure zutropfen. Die Phosphorsäure wird mindestens in stöchiometrischen Mengen verwendet, vorteilhaft arbeitet man mit einem Phosphorsäureüberschuß von 5 Masseprozent. Die Phosphorsäure kann in beliebiger Konzentration verwendet werden, zweckmäßigerweise verwendet man eine höherkonzentrierte Säure, um in kleineren Volumina arbeiten zu können. Insbesondere bietet sich hier die gebräuchliche 85 prozentige Phosphorsäure an.

Die Phosphorsäurezugabe erfolgt bei einer Temperatur der Dispersion unterhalb 70 °C, vorteilhaft bei einer Temperatur um 60 °C. Die Umsetzung läßt sich auch bei Temperaturen bis zu 0 °C vornehmen, jedoch ist in einem solchen Fall die mechanische Nachbehandlung relativ lang, so daß man als untere Temperaturgrenze besser 20 und insbesondere etwa 40 °C wählt.

Bei der Zugabe der Phosphorsäure fällt zunächst das blaue, wasserunlösliche Kupferphosphat aus, das dann bei der anschließenden mechanischen Bewegung unter Rühren in ein hellgrünes, bis nahezu farbloses basisches Kupferphosphat übergeht. Bei der mechanischen Nachbehandlung der Dispersion, dem sogenannten Nachrühren, arbeitet man etwa im gleichen Temperaturbereich wie bei der Fällung mit Phosphorsäure.

Temperaturen über 70 °C sollen sowohl beim Fällen als auch beim Nachrühren nicht überschritten werden, weil sonst dunkle und grobkristalline Kupferphosphate erhalten werden. Tiefere Temperaturen als 40 °C bedingen lange Nachrührzeiten. Es ist jedoch möglich, daß man die Fällung bei höheren Temperaturen unterhalb 70 °C vornimmt und das Nachrühren ohne weitere Wärmezufuhr zu Ende führt, soweit hierbei eine Temperatur von 40 °C zweckmäßigerweise nicht unterschritten wird.

In der wäßrigen Phase herrscht vor Beginn der Fällung ein pH-Wert von etwa 8, der nach der Phosphorsäurezugabe auf etwa 4 abfällt, in der Zwischenphase des Nachrührens wieder auf 5 bis 6 ansteigt und schließlich im Endzustand sich auf einen konstanten Wert von etwa 4 einstellt.

Die Reaktionsmischung wird nach dem sogenannten Nachrühren kurz auf Siedetemperatur der wäßrigen Phase erhitzt, um das Rest-Kohlendioxid zu entfernen. Gegebenenfalls ist auch eine Temperatur von 90 bis 100 °C ausreichend.

Schließlich wird das basische Kupferphosphat von der wäßrigen Phase abgetrennt, z. B. durch Filtrieren oder Absaugen. Das basische Kupferphosphat wird dann unter Normaldruck oder unter vermindertem Druck bei 100 bis 120 °C getrocknet.

Beispiel 1

In eine wäßrige Aufschlämmung von 83 g (0,38 mol) bas. Kupfercarbonat (Schüttgewicht ≈ 500 g/l) in 500 ml Wasser wurden unter Rühren bei einer Temperatur von 60 °C innerhalb von 15 min 50 g (0,4 mol) einer 85prozentigen Phosphorsäure zugetropft. Der pH-Wert der wäßrigen Phase betrug vor der Phosphorsäurezugabe etwa 8, er fiel auf 4 nach der Zugabe. Es wurde 40 min bei 55 °C nachgerührt, wobei der pH-Wert wieder auf über 5 anstieg, sich dann aber auf einen konstanten Wert von 4 einstellte. Während dieser Zeit färbte sich das zuerst hellblaue Produkt allmählich hellgrün bis fast weiß. Es wurde noch 30 min auf Siedetemperatur erhitzt, das Produkt abgesaugt und unter vermindertem Druck bei 100 °C getrocknet. Die Ausbeute betrug 84 g (= 94 % d. Th.).

Analysenwerte : Cu : 52,9 % (Theorie : 53,1 %)
P : 12,9 % (Theorie : 13,0 %)
H : 0,36 % (Theorie : 0,42 %)
Schüttdichte : 320 g/l

In der rasterelektronenmikroskopischen Aufnahme sind stäbchenförmige Kristalle mit einer Länge von etwa 3 µm und einer Dicke von etwa 0,3 µm zu erkennen.

Vergleichsbeispiel 1

Der Versuch von Beispiel 1 wurde wiederholt mit dem Unterschied, daß ein basisches Kupfercarbonat mit einer Schüttdichte von ≈ 1 100 g/l eingesetzt wurde. Der pH-Verlauf war ähnlich wie in Beispiel 1, der Grenzwert wurde jedoch erst nach mehreren Stunden erreicht, ähnlich langsam verlief die Umwandlung des blauen Zwischenproduktes in das Endprodukt. Das Endprodukt war wesentlich dunkler, die mittlere Korngröße betrug etwa 20 µm. Die chemische Zusammensetzung des Produktes entspricht der des Produktes aus Beispiel 1.

Vergleichsbeispiel 2

Der Versuch von Beispiel 1 wurde wiederholt mit dem Unterschied, daß die Temperatur während der Phosphorsäurezugabe und während des Nachrührens 100 °C betrug. Der pH-Wert-Verlauf war ähnlich wie in Beispiel 1, der Grenzwert von 4 wurde jedoch innerhalb von 15 min erreicht ; die blaue Zwischenstufe wurde nicht beobachtet, das Endprodukt ist dunkelgrün. Die Rasterelektronenmikroskopie zeigt ~ 30 µm lange und ~ 5 µm dicke stäbchenförmige Kristalle. Die chemische Zusammensetzung des Produktes entspricht der des Produktes aus Beispiel 1.

**Patentansprüche**

1. Verfahren zur Herstellung von basischem Kupferphosphat der Zusammensetzung $Cu_3(PO_4)_2 \cdot Cu(OH)_2$ mit heller Eigenfarbe und einer mittleren Korngröße < 10 µm, dadurch gekennzeichnet, daß man basisches Kupfercarbonat mit einer Schüttdichte von weniger als 800 g/l in wäßriger Dispersion mit mindestens stöchiometrischen Mengen Phosphorsäure bei Temperaturen von unterhalb 70 °C behandelt, die entstandene Reaktionsmischung im gleichen Temperaturbereich mechanisch weiterbewegt, dann kurzzeitig auf Siedetemperatur der wäßrigen Phase erhitzt und schließlich das basische Kupferphosphat von der wäßrigen Phase abtrennt.

2. Verfahren nach Anspruch 1, dadurch gekennzeichnet, daß das basische Kupfercarbonat eine Schüttdichte von 300 bis 600 g/l besitzt.

3. Verfahren nach den Ansprüchen 1 und 2, dadurch gekennzeichnet, daß man das basische Kupfercarbonat bei Temperaturen von 40 bis 60 °C mit Phosphorsäure behandelt und die entstandene Reaktionsmischung in diesem Temperaturbereich mechanisch weiterbewegt.

**Claims**

1. A process for the production of basic copper phosphate of the formula $Cu_3(PO_4)_2 \cdot Cu(OH)_2$ with a pale natural colour and an average particle size less than 10 µm, characterised in that basic copper carbonate with a bulk density of less than 800 g/l is treated in an aqueous dispersion with at least the stoichiometric amount of phosphoric acid at a temperature of less than 70 °C, the resulting reaction mixture is further stirred mechanically at a temperature within the same range and then is heated briefly to the boiling point of the aqueous phase, and the basic copper phosphate is subsequently separated from the aqueous phase.

2. A process according to claim 1, characterised in that the basic copper carbonate has a bulk density of from 300 to 600 g/l.

3. A process according to claim 1 or 2, characterised in that the basic copper carbonate is treated with phosphoric acid at a temperature of from 40 to 60 °C and the resulting mixture is further stirred mechanically at a temperature within this range.

**Revendications**

1. Procédé de préparation de phosphate de cuivre basique de la composition $Cu_3(PO_4)_2 \cdot Cu(OH)_2$ avant une couleur propre claire et une grosseur moyenne de grain inférieure à 10 µm, caractérisé par le fait que l'on traite en dispersion aqueuse du carbonate de cuivre basique ayant une masse volumique apparente de moins de 800 g par litre par des quantités au moins stœchiométriques d'acide phosphorique, à des températures inférieures à 70 °C, que l'on continue d'agiter mécaniquement le mélange réactionnel formé dans le même domaine de température, qu'on le chauffe alors brièvement à la température d'ébullition de la phase aqueuse et qu'enfin on sépare le phosphate de cuivre basique de la phase aqueuse.

2. Procédé selon la revendication 1, caractérisé par le fait que le carbonate de cuivre basique présente une masse volumique apparente de 300 à 600 g par litre.

3. Procédé selon les revendications 1 et 2, caractérisé par le fait que l'on traite le carbonate de cuivre basique par l'acide phosphorique à des températures de 40 à 60 °C et que l'on continue d'agiter mécaniquement, dans ce domaine de température, le mélange réactionnel formé.